# FASCICULE DE BREVET EUROPEEN

(11) **EP 1 265 037 B1**
(45) Date de publication et mention de la délivrance du brevet: **15.08.2007**
(21) Numéro de dépôt: 02291366.9
(22) Date de dépôt: 04.06.2002
(51) Int. Cl.: F23R 3/60, F23R 3/06

(54) **Accrochage de chambre de combustion CMC de turbomachine utilisant les trous de dilution**
Verdünnungsluftlöcher verwendende Befestigung einer Turbinenbrennkammer aus keramischem Matrix-Verbundwerkstoff
Fixation of turbine ceramic matrix composite combustion chamber using dilution holes

(30) Priorité: 06.06.2001 FR 0107366
(43) Date de publication de la demande: 11.12.2002
(73) Titulaire: SNECMA, 75015 Paris (FR)
(72) Inventeur: Hernandez, Didier, 77720 Quiers (FR); Calvez, Gwénaelle, 77000 Melun (FR); Forestier, Alexandre, 77350 Boissise-la-Bertrand (FR)
(74) Mandataire: David, Alain

(56) Documents cités:
- GB-A- 2 035 474
- US-A- 2 509 503
- US-A- 4 907 411
- US-A- 5 701 733
- US-A- 6 131 384

## Description

### Domaine de l'invention

La présente invention se rapporte au domaine spécifique des turbomachines et elle s'intéresse plus particulièrement au problème posé par le montage d'une chambre de combustion en matériau composite de type CMC (composite à matrice céramique) dans les carters métalliques de chambre d'une turbomachine. Une telle turbomachine est connue à partir du document US 4 907 411.

### Art antérieur

Classiquement, dans un turboréacteur ou un turbopropulseur, la turbine haute pression, notamment son distributeur d'entrée (HPT nozzle), la chambre de combustion ainsi que les enveloppes (ou carters) interne et externe de cette chambre sont réalisées dans un même matériau, généralement métallique. Cependant, dans certaines conditions particulières d'utilisation mettant en oeuvre des températures de combustion notablement élevées, l'emploi d'une chambre métallique s'avère d'un point de vue thermique totalement inadaptée et il doit être recouru à une chambre à base de matériaux composites haute température de type CMC. Toutefois, les difficultés de mise en oeuvre et le coût de ces matériaux font que leur utilisation est le plus souvent limitée à la chambre de combustion elle même, le distributeur d'entrée de la turbine haute pression et les enveloppes interne et externe de la chambre restant alors réalisées plus classiquement en des matériaux métalliques. Or, les matériaux métalliques et les matériaux composites ont des coefficients de dilatation thermique très différents. Il en résulte des problèmes particulièrement aigus de liaison avec les enveloppes interne et externe et d'interface au niveau du distributeur, en entrée de la turbine haute pression.

### Objet et définition de l'invention

La présente invention pallie ces inconvénients en proposant un montage de la chambre de combustion dans les carters, ayant la capacité d'absorber les déplacements induits par les différences des coefficients de dilatation de ces pièces. Un but de l'invention est aussi de proposer un montage qui utilise au mieux les caractéristiques existantes de la chambre de combustion.

Ces buts sont atteints par une turbomachine comportant, dans des enveloppes annulaires interne et externe en matériau métallique et selon un sens F d'écoulement des gaz, un ensemble d'injection d'un carburant, une chambre de combustion annulaire en matériau composite ayant un axe longitudinal et comportant une pluralité d'orifices d'alimentation en comburant, et un distributeur annulaire en matériau métallique formant l'étage d'entrée à aubes fixes d'une turbine haute pression, caractérisée en ce que ladite chambre de combustion en matériau composite est maintenue en position entre lesdites enveloppes annulaires métalliques interne et externe par une pluralité de languettes métalliques souples, des premières extrémités desdites languettes étant reliées entre elles par une couronne métallique fixée solidairement à une desdites enveloppes annulaires métalliques interne et externe par des premiers moyens de fixation et des secondes extrémités étant fixées solidairement à ladite chambre de combustion en matériau composite au niveau d'au moins une partie desdits orifices d'alimentation en comburant par des seconds moyens de fixation, la souplesse desdites languettes de fixation permettant à des températures élevées des libres déplacements radiaux et axiaux entre ladite chambre de combustion en matériau composite et lesdites enveloppes annulaires métalliques. Les orifices d'alimentation en comburant sont constitués par des trous d'alimentation en air d'une zone primaire et/ou d'une zone de dilution de ladite chambre de combustion.

Avec cette structure particulière de liaison fixe, les différentes usures dues aux corrosions de contact des systèmes de l'art antérieur peuvent être évitées. Le recours aux trous primaires ou de dilution (selon la configuration de chambre envisagée) comme point d'ancrage permet de plus de simplifier considérablement cette liaison et d'en limiter l'encombrement. En outre, la présence des languettes souples en lieu et place des brides traditionnelles permet un gain en masse particulièrement appréciable. Ces languettes, de part leur souplesse, permettent de supporter facilement l'écart de dilatation apparaissant aux températures élevées entre pièces métalliques et composites (en reprenant les déplacements dus à la dilatation) tout en assurant un parfait maintien et un bon centrage de la chambre de combustion dans les enveloppes annulaires.

Les languettes de fixation souples sont réalisées en un matériau métallique et les premiers moyens de fixation sont constitués de préférence par une pluralité de boulons.

Selon le mode de réalisation envisagé, lesdites premières extrémités des languettes sont soit reliées par brasage ou soudage à ladite couronne soit forment une pièce unique avec elle. Lorsque ladite enveloppe annulaire métallique est formée en deux parties, cette couronne est de préférence montée entre des brides de liaison de ces deux parties de ladite enveloppe annulaire métallique.

Selon un mode de réalisation préférentiel, lesdits seconds moyens de fixation comportent chacun une collerette insérée dans l'orifice d'alimentation en comburant de ladite chambre de combustion et sertie sur les secondes extrémités des languettes pour assurer le maintien de ces languettes contre la chambre de combustion une fois le sertissage réalisé.

Selon un mode de réalisation alternatif, lesdits seconds moyens de fixation comportent une pluralité d'inserts formés chacun de deux parties concentriques fixées l'une sur l'autre, d'une part une collerette appuyée sur une paroi axiale de la chambre de combustion et d'autre part une bague qui entoure ladite collerette et plaque les secondes extrémités des languettes contre ladite paroi axiale.

Avantageusement, lesdites languettes ont une ouverture pratiquée près de leurs dites secondes extrémités pour améliorer l'alimentation desdits orifices d'alimentation en comburant.

De préférence, l'étanchéité de la veine de gaz entre ladite chambre de combustion et ledit distributeur est assurée par un joint circulaire « à lamelles » qui s'appuie directement sur une extrémité aval de ladite chambre de combustion formant un plan d'appui pour ce joint circulaire d'étanchéité.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique en demi-coupe axiale d'une zone centrale d'une turbomachine dans un premier mode de réalisation de l'invention,
- les figures 1A et 1B montrent un exemple de languette souple destinée à la fixation respectivement des parois externe et interne de la chambre de combustion,
- la figure 2 est une vue agrandie d'une partie de la figure 1 dans une configuration de liaison alternative, et
- la figure 3 est une vue schématique en demi-coupe axiale d'une zone centrale d'une turbomachine dans un second mode de réalisation de l'invention.

### Description détaillée d'un mode de réalisation préférentiel

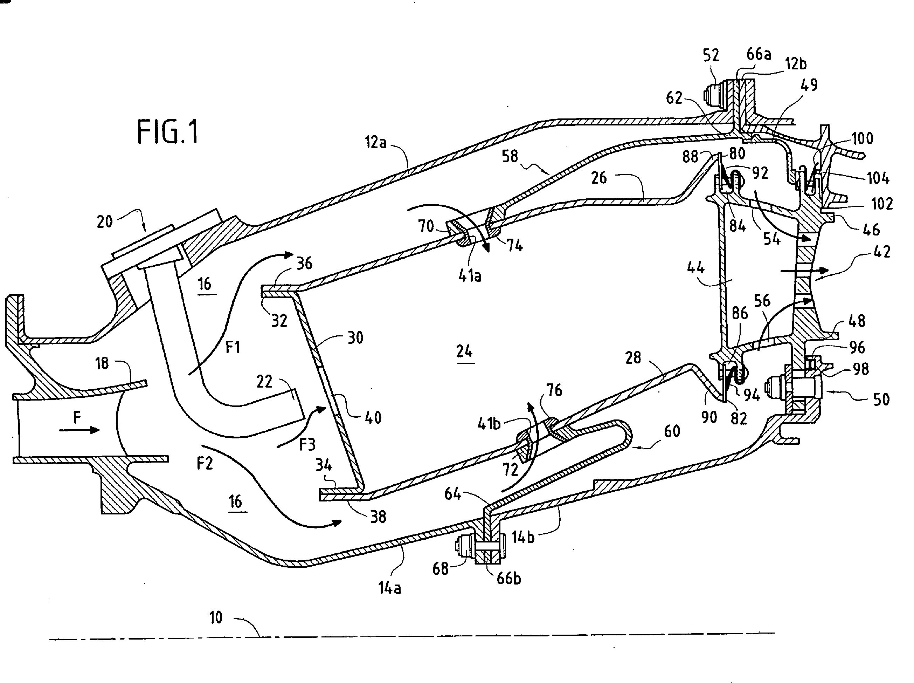

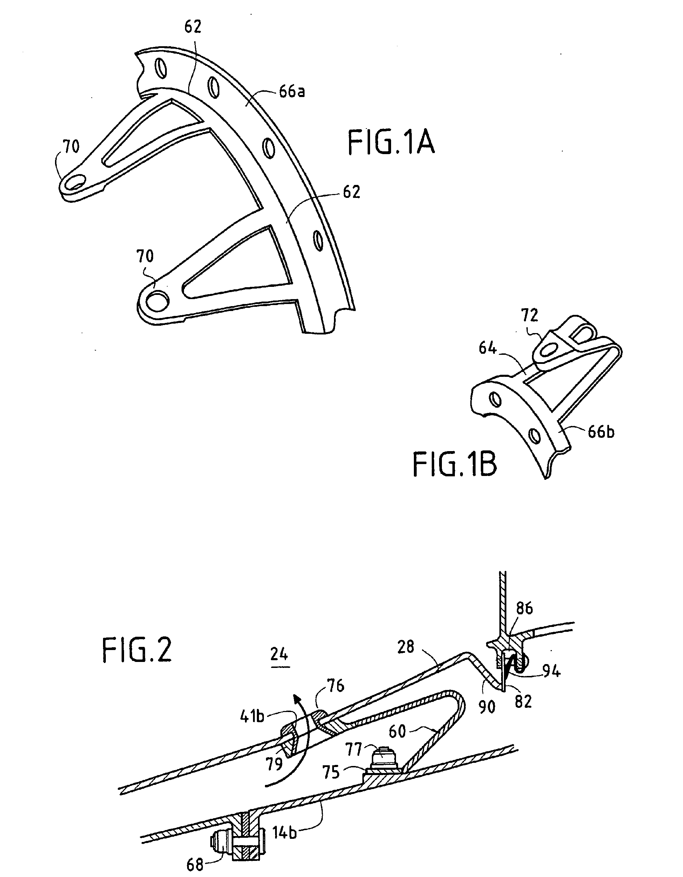

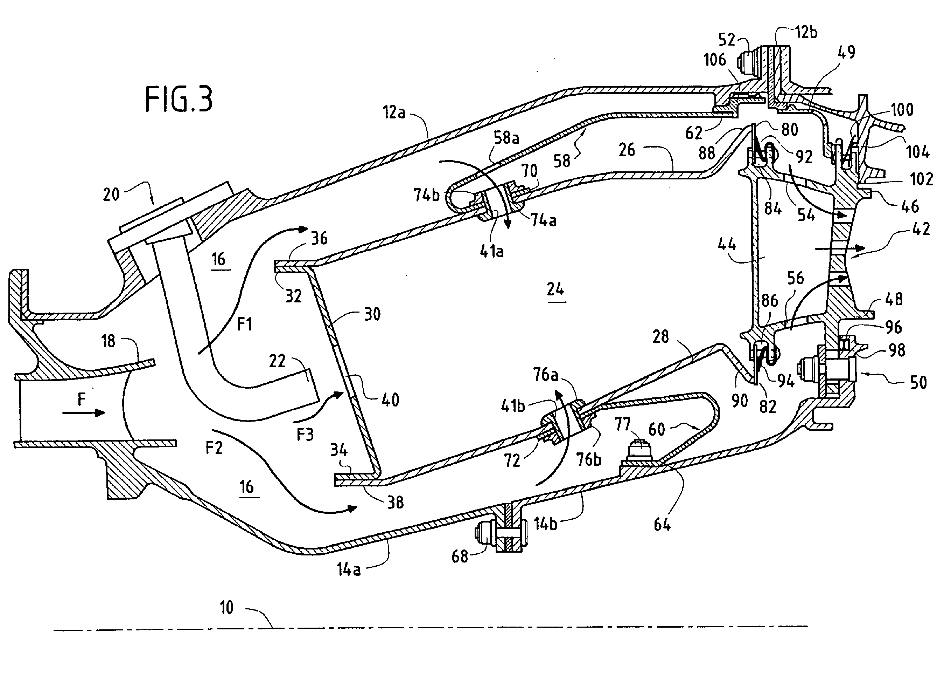

Les figures 1 et 3 montrent en demi-coupe axiale une partie centrale d'un turboréacteur ou d'un turbopropulseur (appelé turbomachine dans la suite de la description) comprenant :
. une enveloppe annulaire externe (ou carter externe) en deux parties 12a, 12b en matériau métallique, d'axe longitudinal 10,
. une enveloppe annulaire interne (ou carter interne) coaxiale en deux parties 14a, 14b également en matériau métallique,
. un espace annulaire 16 compris entre les deux enveloppes 12a, 12b et 14a, 14b recevant le comburant comprimé, généralement de l'air, provenant en amont d'un compresseur (non représenté) de la turbomachine, au travers d'un conduit annulaire de diffusion 18 définissant un flux général F d'écoulement des gaz,
   cet espace 16 comportant, dans le sens d'écoulement des gaz, tout d'abord un ensemble d'injection formé d'une pluralité de systèmes d'injection 20 régulièrement répartis autour du conduit 18 et comportant une buse d'injection de carburant 22 fixée sur une partie amont 12a de l'enveloppe annulaire externe (dans un souci de simplification des dessins le mélangeur et le déflecteur associé à chaque buse d'injection n'ont pas été représentés), ensuite une chambre de combustion en matériau composite 24, par exemple de type CMC, formée d'une paroi axiale externe 26 et d'une paroi axiale interne 28, toutes deux coaxiales d'axe 10, et d'une paroi transversale 30 elle même en matériau composite haute température de type CMC ou autres (carbone par exemple) qui constitue le fond de cette chambre de combustion et qui comporte des rabats 32, 34 fixés, par exemple par des boulons métalliques ou réfractaires notamment à vis à tête conique, sur des extrémités amont 36, 38 des parois axiales 26, 28, ce fond de la chambre 30 étant pourvu d'orifices de passage 40 pour permettre l'injection du carburant et d'une partie du comburant dans la chambre de combustion 24, et les parois axiales comportant une pluralité d'orifices 41a, 41b d'alimentation en comburant, et enfin un distributeur annulaire 42 en matériau métallique formant un étage d'entrée d'une turbine haute pression (non représentée) et comportant classiquement une pluralité d'aubes fixes 44 montées entre une plate-forme circulaire externe 46 et une plate-forme circulaire interne 48.

Le distributeur est fixé sur une partie aval 14b de l'enveloppe annulaire interne de la turbomachine par des premiers moyens de fixation amovibles constitués de préférence par une pluralité de boulons 50 tout en reposant sur des moyens support 49 solidaire de l'enveloppe annulaire externe de la turbomachine.

Le comburant comprimé, en sortie du conduit de diffusion 18, est séparé en plusieurs flux distincts dont deux flux F1, F2 s'écoulant de part et d'autre de la chambre de combustion 24 (un autre flux central F3 se mélangeant au carburant pour être injecté dans la chambre). Chaque flux de comburant F1, F2 est ensuite soit introduit dans cette chambre par les orifices d'alimentation 41a, 41b soit dirigé vers des orifices de passage 54, 56 ménagés dans les plates-formes métalliques externe 46 et interne 48 du distributeur 42 pour assurer un refroidissement des aubes fixes 44 de ce distributeur en entrée du rotor de la turbine haute pression.

Selon l'invention, la chambre de combustion 24, qui a un coefficient de dilatation thermique très différent des autres pièces métalliques formant la turbomachine, est maintenue fixement en position entre les enveloppes annulaires interne et externe par une pluralité de languettes souples 58, 60 régulièrement réparties autour de la chambre de combustion. Ces languettes de fixation sont montées pour une première partie d'entre elles (voir la languette référencée 58) entre l'enveloppe annulaire externe 12a, 12b et la paroi axiale externe 26 de la chambre de combustion et pour une seconde partie (comme la languette 60) entre l'enveloppe annulaire interne 14a, 14b et la paroi axiale interne 28 de la chambre de combustion.

Comme l'illustrent les figures 1A et 1B, chaque languette de fixation souple en matériau métallique, de forme sensiblement triangulaire, est brasée ou soudée par sa base 62 ;64 à, ou formée en une pièce unique d'un seul tenant avec, une couronne métallique 66a, 66b fixée solidairement et selon son emplacement à l'une ou l'autre des enveloppes annulaires métalliques externe 12 ou interne 14 par des premiers moyens de fixation 52, 68, son sommet 70; 72 étant fixé solidairement aux parois axiales externe 26 et interne 28 de la chambre de combustion en matériau composite au niveau de tout ou partie des orifices d'alimentation en comburant 41a, 41b par des seconds moyens de fixation 74, 76. Ces orifices d'alimentation en comburant peuvent être les trous de dilution et/ou les trous primaires d'alimentation en air (notamment dans le cas d'une configuration de chambre dite « courte ») de la chambre de combustion. Le nombre de languettes est proportionnel au nombre de ces trous qui sont en général au même nombre que les buses d'injection ou égal à un multiple de ce nombre (par exemple on montera 60 languettes si la chambre comporte 20 buses d'injection avec chacun 3 trous de dilution).

La figure 1 illustre un premier mode de réalisation de l'invention dans lequel les sommets 70, 72, formant des secondes extrémités des languettes, sont fixés respectivement sur les parois axiales externe 26 et interne 28 de la chambre de combustion par sertissage au moyen d'une collerette 74, 76 insérée coté foyer dans l'orifice d'alimentation en comburant 41a, 41b et qui va assurer le maintien de la languette contre la paroi de la chambre une fois le sertissage réalisé. Le diamètre réel de l'orifice d'alimentation (trou de dilution ou trou primaire) est repris par la collerette dont les bords externes (coté foyer) sont arrondis pour ne pas jouer de rôle d'accroche flamme.

Les bases 62, 64, formant des premières extrémités des languettes, reliées entre elles par la couronne 66a, 66b sont quant à elles de préférence prises entre des brides existantes de liaison des deux parties amont et aval des enveloppes annulaires interne 14a, 14b et externe 12a, 12b et maintenues fixement par les moyens de fixation 52, 68 qui de préférence sont de type boulon.

Dans une variante illustrée à la figure 2, les languettes 60 de fixation à l'enveloppe annulaire interne 14b qui se présentent sous la forme d'une mince lame métallique (de largeur constante ou non) comportent une première extrémité soudée sur une couronne métallique 75 non plus serrée entre brides mais fixée directement sur la partie aval 14b de l'enveloppe annulaire interne par des moyens de fixation 77, par exemple de type boulon. Avantageusement, pour en faciliter le montage les secondes extrémités de ces languettes sont constituées par une pièce métallique 79.

L'étanchéité de la veine de gaz entre la chambre de combustion 24 et le distributeur 42 est assurée par un joint circulaire « à lamelles » 80, 82 monté dans une rainure 84, 86 de chacune des plates-formes externe 46 et interne 48 du distributeur et qui vient s'appuyer directement une extrémité aval 88, 90 de la chambre de combustion formant un plan d'appui pour ce joint circulaire d'étanchéité. Le joint est maintenu en appui contre l'extrémité de la chambre au moyen d'un élément élastique, de type ressort circulaire à lames 92, 94, fixé sur le distributeur. Dans une variante non représentée, ce joint peut s'appuyer non plus directement sur l'extrémité aval de la chambre de combustion mais sur une virole en matériau composite rapportée sur cette extrémité aval, classiquement par brasage ou moins classiquement par une technique d'implantation connue sous le seul anglicisme de « pin'sage ».

Quant à l'étanchéité des flux d'écoulement de gaz entre la chambre de combustion et la turbine, il est réalisé d'une part par un joint circulaire d'étanchéité de type « oméga » 96 monté dans une rainure circulaire 98 d'une bride de l'enveloppe annulaire interne 14 en contact direct avec la plate-forme circulaire interne 48 du distributeur et d'autre part par un autre joint circulaire « à lamelles » 100 monté dans une gorge circulaire 102 de la plate-forme circulaire externe du distributeur 46 et dont une extrémité est en contact direct avec un béquet circulaire 104 de la partie aval 12b de l'enveloppe annulaire externe.

Dans un second mode de réalisation de l'invention, illustré à la figure 3, les secondes extrémités des languettes 70, 72 sont fixées respectivement sur les parois axiales externe 26 et interne 28 de la chambre de combustion par l'intermédiaire d'inserts formés de deux parties concentriques fixées (avantageusement par brasage ou soudage) l'une sur l'autre, d'une part une collerette 74a, 76a appuyée sur la paroi coté foyer et d'autre part une bague 74b, 76b qui entoure la collerette et plaque cette seconde extrémité de la languette formant oeillet sur la paroi. Comme dans le mode de réalisation précédent, le diamètre réel du trou de dilution ou du trou primaire est repris par la collerette dont les bords externes sont arrondis pour ne pas jouer de rôle d'accroche flamme.

Avantageusement, la languette 58 peut comporter une ouverture 58a pratiquée près de la seconde extrémité 70 de la languette au droit de l'orifice d'injection 41a pour en faciliter l'alimentation après son montage. En outre, dans l'exemple illustré, les premières extrémités de cette languette ne sont plus soudées sur une couronne montée entre brides (comme le montre la figure 1) mais brasées au niveau d'un détrompeur 106 solidaire de l'enveloppe annulaire externe 12.

Dans toutes les configurations précitées, la souplesse des languettes de fixation permet de supporter l'écart de dilatation thermique apparaissant aux températures élevées entre la chambre de combustion en matériau composite et les enveloppes annulaires métalliques tout en assurant le maintien et le positionnement de la chambre. En outre, l'utilisation des orifices d'alimentation en comburant comme points d'ancrage de ces languettes en facilite le montage tout en minimisant l'encombrement général.

## Revendications

1. Turbomachine comportant, dans des enveloppes annulaires interne et externe en matériau métallique (12, 14) et selon un sens F d'écoulement des gaz, un ensemble d'injection d'un carburant (20 ; 22), une chambre de combustion annulaire en matériau composite (24) ayant un axe longitudinal (10) et une pluralité d'orifices d'alimentation en comburant (41a, 41b), et un distributeur annulaire en matériau métallique (42) formant l'étage d'entrée à aubes fixes (44) d'une turbine haute pression, **caractérisée en ce que** ladite chambre de combustion en matériau composite est maintenue en position entre lesdites enveloppes annulaires interne et externe métalliques par une pluralité de languettes métalliques souples (58, 60), des premières extrémités (62, 64) desdites languettes étant reliées entre elles par une couronne métallique (66a, 66b) fixée solidairement à une desdites enveloppes annulaires métalliques interne et externe (12, 14) par des premiers moyens de fixation (52 ; 68, 77) et des secondes extrémités (70, 72) étant fixées solidairement à ladite chambre de combustion en matériau composite (26, 28) au niveau d'au moins une partie desdits orifices d'alimentation en comburant par des seconds moyens de fixation (74,76 ; 74a,74b,76a,76b), la souplesse desdites languettes de fixation permettant à des températures élevées des libres déplacements radiaux et axiaux entre ladite chambre de combustion en matériau composite et lesdites enveloppes annulaires métalliques interne et externe.

2. Turbomachine selon la revendication 1, **caractérisée en ce que** lesdits orifices d'alimentation en comburant sont constitués par des trous d'alimentation en air d'une zone primaire et/ou d'une zone de dilution de ladite chambre de combustion.

3. Turbomachine selon la revendication 1, **caractérisée en ce que** lesdites premières extrémités des languettes sont reliées par brasage ou soudage à ladite couronne métallique.

4. Turbomachine selon la revendication 1, **caractérisée en ce que** lesdites premières extrémités des languettes forment une pièce unique avec ladite couronne métallique.

5. Turbomachine selon la revendication 1, **caractérisée en ce que** lesdits premiers moyens de fixation sont constitués par une pluralité de boulons.

6. Turbomachine selon la revendication 1, **caractérisée en ce que**, chacune desdites enveloppes annulaires étant formée en deux parties (12a, 12b ; 14a, 14b), ladite couronne métallique est montée entre des brides de liaison de ces deux parties.

7. Turbomachine selon la revendication 1, **caractérisée en ce que** lesdits seconds moyens de fixation comportent chacun une collerette (74, 76) insérée dans chaque orifice d'alimentation en comburant (41a, 41b) de ladite chambre de combustion et sertie sur les secondes extrémités des languettes (70, 72) pour assurer le maintien de ces languettes (58, 60) contre la chambre une fois le sertissage réalisé.

8. Turbomachine selon la revendication 1, **caractérisée en ce que** lesdits seconds moyens de fixation comportent une pluralité d'inserts formés chacun de deux parties concentriques fixées l'une sur l'autre, d'une part une collerette (74a, 76a) appuyée sur une paroi axiale (26, 28) de la chambre de combustion et d'autre part une bague (74b, 76b) qui entoure ladite collerette et plaque les secondes extrémités des languettes (70, 72) contre ladite paroi axiale.

9. Turbomachine selon la revendication 1, **caractérisée en ce que** lesdites languettes comportent une ouverture (58a) pratiquée près de leurs dites secondes extrémités pour améliorer l'alimentation desdits orifices d'alimentation en comburant.

10. Turbomachine selon la revendication 1, **caractérisée en ce que** l'étanchéité de la veine de gaz entre ladite chambre de combustion (24) et ledit distributeur (42) est assurée par un joint circulaire « à lamelles » (80, 82) qui s'appuie directement sur une extrémité aval (88, 90) de ladite chambre de combustion formant un plan d'appui pour ce joint circulaire d'étanchéité.

11. Turbomachine selon la revendication 1, **caractérisée en ce que** l'étanchéité de la veine de gaz entre ladite chambre de combustion (24) et ledit distributeur (42) est assurée par un joint circulaire « à lamelles » (80, 82) qui s'appuie sur une virole en matériau composite rapportée sur cette extrémité aval par brasage ou par implantation.

## Claims

1. A turbomachine comprising in inner and outer annular shells (12, 14) of metal material containing, in a gas flow direction F: a fuel injection assembly (20; 22); an annular combustion chamber (24) of composite material having a longitudinal axis (10) and a plurality of oxidizer feed orifices (41a, 41b); and an annular nozzle (42) of metal material having fixed blades (44) and forming the inlet stage of a high pressure turbine, the machine being **characterised in that** said combustion chamber of composite material is held in position between said inner and outer annular metal shells by a plurality of flexible metal tongues (58, 60), first ends (62, 64) of said tongues being interconnected by respective metal rings (66a, 66b) fixed securely to one of said inner and outer annular metal shells (12, 14) by first fixing means (52; 68, 77), and second ends (70, 72) being fixed securely to said composite material combustion chamber (26, 28) via at least a fraction of said oxidizer feed orifices by second fixing means (74, 76; 74a, 74b, 76a, 76b), the flexibility of said fixing tongues serving, at high temperatures, to accommodate free displacement in radial and axial directions between said composite material combustion chamber and said inner and outer annular metal shells.

2. A turbomachine according to claim 1, **characterised in that** said oxidizer feed orifices are constituted by holes for feeding air to a primary zone and/or to a dilution zone of said combustion chamber.

3. A turbomachine according to claim 1, **characterised in that** said first ends of the tongues are connected by brazing or welding to said metal ring.

4. A turbomachine according to claim 1, **characterised in that** said first ends of the tongues are formed integrally with said metal ring.

5. A turbomachine according to claim 1, **characterised in that** said first fixing means are constituted by a plurality of bolts.

6. A turbomachine according to claim 1, **characterised in that** since each of said annular shells is made up of two portions (12a, 12b; 14a, 14b), said metal ring is mounted between flanges for interconnecting said two portions.

7. A turbomachine according to claim 1, **characterised in that** each of said second fixing means comprises a collar (74, 76) inserted in each oxidizer feed orifice (41a, 41b) of said combustion chamber and crimped onto the second ends of the tongues (70, 72) to hold said tongues (58, 60) against the combustion chamber once crimping has been performed.

8. A turbomachine according to claim 1, **characterised in that** said second fixing means comprise a plurality of inserts each made up of two coaxial portions that are fixed to each other, comprising firstly a collar (74a, 76a) bearing against a side wall (26, 28) of the combustion chamber and secondly a ring (74b, 76b) surrounding said collar and pressing said second ends of the tongues (70, 72) against said side wall.

9. A turbomachine according to claim 1, **characterised in that** each of said tongues comprises an opening (58a) formed close to its said second end in order to improve feed via said oxidizer feed orifices.

10. A turbomachine according to claim 1, **characterised in that** sealing for said stream of gas is provided between said combustion chamber (24) and said nozzle (42) by a "spring-blade" circular gasket (80, 82) bearing directly against a downstream end (88, 90) of said combustion chamber which forms a bearing plane for said circular gasket.

11. A turbomachine according to claim 1, **characterised in that** sealing for said stream of gas is provided between said combustion chamber (24) and said nozzle (42) by a "spring-blade" circular gasket (80, 82) bearing against a ring of composite material fitted to said downstream end by brazing or by being implanted therein.

## Patentansprüche

1. Turbomaschine, umfassend in inneren und äußeren ringförmigen Hüllen aus einem metallischen Material (12, 14) und in einer Fließrichtung F von Gasen eine Einheit zur Treibstoffeinspritzung (20; 22), eine ringförmige Brennkammer aus einem Verbundstoff (24), die eine Längsachse (10) und eine Vielzahl von Öffnungen zur Zuführung eines Sauerstoffträgers (41 a, 41 b) besitzt, und einen ringförmigen Verteiler aus einem metallischen Material (42), der die Eingangsstufe mit festen Schaufeln (44) einer Hochdruckturbine bildet, **dadurch gekennzeichnet, daß** die Brennkammer aus Verbundstoff in einer Position zwischen den inneren und äußeren ringförmigen metallischen Hüllen durch eine Vielzahl von biegsamen metallischen Zungen (58, 60) gehalten wird, wobei erste Enden (62, 64) der Zungen miteinander durch einen metallischen Kranz (66a, 66b) verbunden sind, der fest mit einer der inneren und äußeren metallischen ringförmigen Hüllen (12, 14) durch erste Befestigungsmittel (52; 68, 77) verbunden ist, und wobei zweite Enden (70, 72) fest mit der Brennkammer aus Verbundstoff (26, 28) im Bereich mindestens eines Teils der Öffnungen zur Zuführung eines Sauerstoffträgers durch zweite Befestigungsmittel (74, 76; 74a, 74b, 76a, 76b) verbunden sind, wobei die Biegsamkeit der Befestigungszungen bei hohen Temperaturen freie radiale und axiale Verschiebungen zwischen der Brennkammer aus Verbundstoff und den inneren und äußeren metallischen ringförmigen Hüllen ermöglicht.

2. Turbomaschine nach Anspruch 1, **dadurch gekennzeichnet, daß** die Öffnungen zur Zuführung eines Sauerstoffträgers von Löchern zur Zuführung von Luft in eine primäre Zone und/oder eine Verdünnungszone der Brennkammer gebildet sind.

3. Turbomaschine nach Anspruch 1, **dadurch gekennzeichnet, daß** die ersten Enden der Zungen durch Löten oder Schweißen mit dem metallischen Kranz verbunden sind.

4. Turbomaschine nach Anspruch 1, **dadurch gekennzeichnet, daß** die ersten Enden der Zungen ein einziges Stück mit dem metallischen Kranz bilden.

5. Turbomaschine nach Anspruch 1, **dadurch gekennzeichnet, daß** die ersten Befestigungsmittel von einer Vielzahl von Bolzen gebildet sind.

6. Turbomaschine nach Anspruch 1, **dadurch gekennzeichnet, daß**, da jede der ringförmigen Hüllen aus zwei Teilen (12a, 12b; 14a, 14b) gebildet ist, der metallische Kranz zwischen Verbindungsflanschen dieser beiden Teile montiert ist.

7. Turbomaschine nach Anspruch 1, **dadurch gekennzeichnet, daß** die zweiten Befestigungsmittel jeweils einen Kragen (74, 76) umfassen, der in jede Öffnung zur Zuführung eines Sauerstoffträgers (41 a, 41 b) der Brennkammer eingesetzt und an den zweiten Enden der Zungen (70, 72) befestigt ist, um den Halt der Zungen (58, 60) an der Kammer zu sichern, wenn die Befestigung durchgeführt ist.

8. Turbomaschine nach Anspruch 1, **dadurch gekennzeichnet, daß** die zweiten Befestigungsmittel eine Vielzahl von Einsätzen umfassen, die jeweils von zwei konzentrischen Teilen, die aneinander befestigt sind, gebildet sind, nämlich einerseits einem Kragen (74a, 76a), der sich auf eine Axialwand (26, 28) der Brennkammer stützt, und andererseits einem Ring (74b, 76b), der den Kragen umgibt und die zweiten Enden der Zungen (70, 72) an die Axialwand drückt.

9. Turbomaschine nach Anspruch 1, **dadurch gekennzeichnet, daß** die Zungen eine Öffnung (58a) umfassen, die in der Nähe ihrer zweiten Enden vorgesehen sind, um die Versorgung der Zuführöffnungen mit Sauerstoffträger zu verbessern.

10. Turbomaschine nach Anspruch 1, **dadurch gekennzeichnet, daß** die Dichtigkeit der Gasleitung zwischen der Brennkammer (24) und dem Verteiler (42) durch eine Ringdichtung "mit Lamellen" (80, 82) gewährleistet ist, die direkt am stromabwärtigen Ende (88, 90) der Brennkammer aufliegt, die eine Stützebene für diese Ringdichtung bildet.

11. Turbomaschine nach Anspruch 1, **dadurch gekennzeichnet, daß** die Dichtigkeit der Gasleitung zwischen der Brennkammer (24) und dem Verteiler (42) durch eine Ringdichtung "mit Lamellen" (80, 82) gewährleistet ist, die auf einem Ring aus Verbundstoff aufliegt, der auf dieses stromabwärtige Ende durch Löten oder Einsetzen aufgebracht ist.
